# EUROPÄISCHE PATENTSCHRIFT

(11) **EP 3 344 414 B1**
(45) Veröffentlichungstag und Bekanntmachung des Hinweises auf die Patenterteilung: **09.10.2019**
(21) Anmeldenummer: 16760462.8
(22) Anmeldetag: 01.09.2016
(51) Int. Cl.: B23K 26/08, B23K 26/38, B23K 31/00, B23K 26/60, B21D 35/00, B21D 1/05, B23K 101/16

(54) **VERFAHREN UND VORRICHTUNG ZUR HERSTELLUNG EINER BLECHPLATINE MITTELS LASERSCHNEIDEN**
METHOD AND DEVICE FOR MAKING SHEET METAL PLATES BY LASER CUTTING
PROCEDE ET DISPOSITIF DE FABRICATION DE PLAQUES DE MÉTAL EN FEUILLE PAR COUPE AU LASER

(30) Priorität: 04.09.2015 DE 102015217015
(43) Veröffentlichungstag der Anmeldung: 11.07.2018
(73) Patentinhaber: Schuler Pressen GmbH, 91093 Heßdorf (DE)
(72) Erfinder: SEITZ, Alexander, 91054 Erlangen (DE)
(74) Vertreter: Dr. Gassner & Partner mbB
(86) Internationale Anmeldenummer: PCT/EP2016/070651
(87) Internationale Veröffentlichungsnummer: WO 2017/037194

(56) Entgegenhaltungen:
- EP-A1- 0 707 905
- EP-A1- 2 355 952
- DE-A1- 10 042 197

## Beschreibung

Die Erfindung betrifft ein Verfahren und eine Vorrichtung zur Herstellung einer Blechplatine mittels Laserschneiden.

Aus der EP 0 707 905 A1 ist ein Verfahren zum Herstellen von Blechtafeln aus Blechplatinen bekannt. Eine Blechplatine wird mittels einer Transportvorrichtung zu einer Reckvorrichtung gefördert. Die Platine wird anschließend gegriffen und in einer Reckvorrichtung gereckt. Anschließend wird die Blechplatine einer Schneidvorrichtung zugeführt.

Die WO 2010/052339 A1 offenbart eine Vorrichtung zur Herstellung einer Blechplatine mittels Laserschneiden mit einer Laserschneidvorrichtung. Die Vorrichtung umfasst einen Laserschneidkopf, der entlang einer Transporteinrichtung und senkrecht dazu bewegbar ist. Ferner ist eine Reckeinrichtung zum Recken eines Blechs vorgesehen. Dazu wird ein Blech mittels zweier Klemmvorrichtungen gehalten, so dass zum Recken eine Zuspannung auf das Blech ausgeübt werden kann. Die dort beschriebene Vorrichtung dient zum Verschweißen von Blechen.

Aus der EP 1 586 407 A1 ist ein Verfahren zur Herstellung einer Blechplatine mittels Laserschneiden bekannt. Dabei wird ein Blechband in einer Transportrichtung zu einer Laserschneidvorrichtung zugeführt, welche einen in Transportrichtung in einer senkrecht zur Transportrichtung verlaufenden y-Richtung hin und her bewegbaren Laserschneidkopf aufweist. Das Blechband wird stromaufwärts mittels einer Walzenrichtmaschine gerichtet. Zwischen der Walzenrichtmaschine und der Laserschneidvorrichtung befindet sich eine Schlaufengrube. - In der Praxis weist ein mittels einer Walzenrichtmaschine gerichtetes Blechband mitunter eine Welligkeit auf. Das kann dazu führen, dass ein Laserschneidkopf das Blechband berührt und ggf. in seiner Position verschiebt. Das führt beim Schneidvorgang zu einer Abweichung von einem vorgegebenen Schneidweg. Abgesehen davon werden im Bereich welliger Oberflächen die Schnittkanten nicht senkrecht, sondern schräg geschnitten. Schließlich werden beim Rollrichten eines Blechs darin enthaltene Spannung nicht beseitigt. Infolgedessen kann es beim Schneiden mittels der Laserschneidvorrichtung zur Freisetzung von Spannungen und damit zu einem Verzug oder Werfen der ausgeschnitten Blechplatinen kommen.

Die DE 100 42 197 A1 offenbart ein Verfahren und eine Vorrichtung zur Herstellung einer Blechplatine mittels Laserschneiden. Die Vorrichtung weist zwei Klemmbacken zum Einklemmen eines Blechteils auf. Die Vorrichtung ist dazu geeignet, dass ein Blechteil in die Vorrichtung eingelegt wird und das Blechteil mittels der Klemmvorrichtung gehalten wird. Die Klemmvorrichtung ist weiter dazu geeignet, das aufgenommene Blechteil zu recken und anschließend zu entspannen. Während oder nach der Durchführung des Reckvorgangs kann mittels der Laserschneidvorrichtung eine Blechplatine aus dem Blech durch Bewegen des Laserschneidkopfs entlang eines vorgegebenen Schneidwegs ausgeschnitten werden.

Aufgabe der Erfindung ist es, die Nachteile nach dem Stand der Technik zu beseitigen. Es sollen insbesondere ein Verfahren und eine Vorrichtung angegeben werden, mit denen die Herstellung von Blechplatinen mit verbesserter Planheit möglich ist. Nach einem weiteren Ziel der Erfindung sollen die Blechplatinen möglichst exakt gemäß einer vorgegebenen Kontur hergestellt werden.

Diese Aufgabe wird durch die Merkmale der Patentansprüche 1 und 5 gelöst. Zweckmäßige Ausgestaltungen der Erfindung ergeben sich aus den Merkmalen der jeweils abhängigen Patentansprüche.

Nach Maßgabe der Erfindung wird ein Verfahren zur Herstellung einer Blechplatine mittels Laserschneiden mit den folgenden Schritten vorgeschlagen:
Zuführen eines Blechs in einer Transportrichtung zu einer Laserschneidvorrichtung, welche einen in Transportrichtung und in einer senkrecht zur Transportrichtung verlaufenden y-Richtung hin und her bewegbaren Laserschneidkopf aufweist,
klemmendes Greifen eines ersten Abschnitts des Blechs stromaufwärts der Laserschneidvorrichtung mittels einer ersten Klemmvorrichtung und klemmendes Greifen eines zweiten Abschnitts des Blechs stromabwärts der Laserschneidvorrichtung mittels einer zweiten Klemmvorrichtung,
Recken des in der Laserschneidvorrichtung aufgenommenen Blechs durch Erzeugen einer Zugspannung auf das zwischen der ersten und der zweiten Klemmvorrichtung klemmend gehaltene Blech,
Entspannen des Blechs, und
Schneiden der Blechplatine aus dem Blech durch Bewegen des Laserschneidkopfs entlang eines vorgegebenen Schneidwegs.

Das vorgeschlagene Verfahren ermöglicht eine schnelle Herstellung von Blechplatinen. Die Blechplatinen zeichnen sich durch eine hohe Konturtreue und verbesserte Planheit aus. Indem das Blech erst dann gereckt wird, wenn es in der Laserschneidvorrichtung aufgenommen ist, kann der Schritt eines Transports des Blechs in eine Reckeinrichtung sowie der Schritt eines weiteren Transports des gereckten Blechs zur Laserschneidvorrichtung eingespart werden. Die Durchführung des vorgeschlagenen Verfahrens erfordert einen besonders geringen Platzbedarf. Abgesehen davon sind die aus dem Blechband geschnittenen Blechplatinen wegen des vorgeschalteten Schritts des Reckens weitgehend spannungsfrei. Sie sind insbesondere nicht verzogen. Das erleichtert die weitere Verarbeitung der Blechplatinen in nachfolgenden Verarbeitungsschritten.

Unter dem Begriff "Recken" wird im Sinne der vorliegenden Erfindung eine Kaltverformung mittels einachsiger und momentfreier Zugbeanspruchung verstanden.

Eine Zugspannung wird so gewählt, dass die Streckgrenze eines das Blech bildenden Metalls überschritten wird, so dass das Blech plastisch verformt wird.

Vorteilhafterweise wird das Blech beim Schneiden höchstens mit einer der Klemmvorrichtungen gehalten. D. h. nach dem Entspannen des Blechs wird eine klemmende Verbindung einer der Klemmvorrichtungen gelöst. Es ist auch möglich, dass während des Schneidens des Blechs die klemmenden Verbindungen beider Klemmvorrichtungen gelöst werden. Damit ist sichergestellt, dass das Blech während des Schneidens nicht unter Zugspannung steht.

Nach einer weiteren Ausgestaltung der Erfindung ist das Blech ein Blechband, welches kontinuierlich von einem Coil abgewickelt und stromaufwärts der ersten Klemmvorrichtung durch eine Schlaufengrube geführt wird. Das ermöglicht es vorteilhafterweise, das Blech taktweise der Laserschneidvorrichtung zuzuführen. Zur weiteren Verbesserung der Planheit des Blechs kann das Blechband stromaufwärts der Schlaufengrube mittels einer Walzenrichtmaschine gerichtet werden.

Bei dem Blech kann es sich auch um Blechtafeln handeln, welche taktweise, beispielsweise mittels eines Roboters, nacheinander der Laserschneidvorrichtung zugeführt werden. Geschnittene Blechplatinen können ebenfalls mit einem Roboter entnommen oder mit einer geeigneten Fördervorrichtung abtransportiert werden.

Nach weiterer Maßgabe der Erfindung wird eine Vorrichtung zur Herstellung einer Blechplatine mittels Laserschneiden vorgeschlagen, umfassend:
eine Laserschneidvorrichtung mit einem in einer Transportrichtung und einer senkrecht zur Transportrichtung verlaufenden y-Richtung hin und her bewegbaren Laserschneidkopf, und
eine Reckeinrichtung zum Recken eines in der Laserschneidvorrichtung aufgenommenen Blechs, umfassend eine stromaufwärts der Laserschneidvorrichtung vorgesehene erste Klemmvorrichtung zum klemmenden Greifen eines ersten Abschnitts des Blechs, eine stromabwärts der Laserschneidvorrichtung vorgesehene zweite Klemmvorrichtung zum klemmenden Greifen eines zweiten Abschnitts des Blechs und eine Einrichtung zur Änderung eines Abstands zwischen der ersten und der zweiten Klemmvorrichtung, so dass auf ein damit klemmend gegriffenes Blech eine Zugspannung ausgeübt wird, derart, dass eine Streckgrenze eines das Blech bildenden Metalls überschritten wird, so dass das Blech plastisch verformt wird.

Die vorgeschlagene Vorrichtung ermöglicht eine schnelle Herstellung von Blechplatinen. Die Blechplatinen zeichnen sich durch eine hohe Konturtreue und eine verbesserte Planheit aus. Die vorgeschlagene Vorrichtung ist besonders platzsparend.

Nach einer vorteilhaften Ausgestaltung umfasst die Reckeinrichtung einen Rahmen aus zwei sich in Transportrichtung erstreckenden Längsholmen, eine die erste Klemmvorrichtung aufnehmende, sich in y-Richtung erstreckende erste Recktraverse und eine die zweite Klemmvorrichtung aufnehmende, sich in y-Richtung erstreckende zweite Recktraverse. Die beiden Längsholme sind beiderseits der Laserschneidvorrichtung vorgesehen. Die Recktraversen erstrecken sich über eine Breite des Blechs in y-Richtung hinweg bis zu den Längsholmen.

Vorteilhafterweise ist die Laserschneidvorrichtung in Draufsicht innerhalb des Rahmens angeordnet. Im Bereich der Längsholme kann als Einrichtung zur Änderung des Abstands zwischen der ersten und der zweiten Klemmvorrichtung beispielsweise eine Hydraulikeinrichtung vorgesehen sein, mit welcher zumindest eine der beiden Recktraversen in Transportrichtung hin und her bewegbar ist.

Nach einer weiteren Ausgestaltung umfasst die Vorrichtung eine Zuführeinrichtung zum Zuführen des Blechs in der Transportrichtung zur Laserschneidvorrichtung. Es kann sich dabei um einen Roboter oder ein Transportwalzenpaar handeln, welches sich stromaufwärts der ersten Klemmvorrichtung befindet.

Bei dem Blech handelt es sich zweckmäßigerweise um ein auf einem Coil aufgenommenes Blechband. Stromaufwärts der Zuführeinrichtung kann eine Schlaufengrube vorgesehen sein. Das ermöglicht es, das Blech kontinuierlich vom Coil abzuwickeln. Zweckmäßigerweise wird das Blech mittels der Zuführeinrichtung taktweise der Laserschneidvorrichtung zugeführt.

Zum Abführen des geschnittenen Blechbands kann eine Abführvorrichtung vorgesehen sein. Es kann sich dabei um den Roboter oder ein weiteres Transportwalzenpaar handeln, welches sich stromabwärts der zweiten Klemmvorrichtung befindet.

Nachfolgend werden Ausführungsbeispiele der Erfindung anhand der Zeichnungen näher erläutert. Es zeigen:
- Fig. 1: eine schematische Seitenansicht einer Laserschneidlinie,
- Fig. 2: eine schematische Seitenansicht der kombinierten Reck- und Laserschneidvorrichtung in Fig. 1,
- Fig. 3: eine Draufsicht gemäß Fig. 2 und
- Fig. 4: eine Frontansicht gemäß Fig. 2.

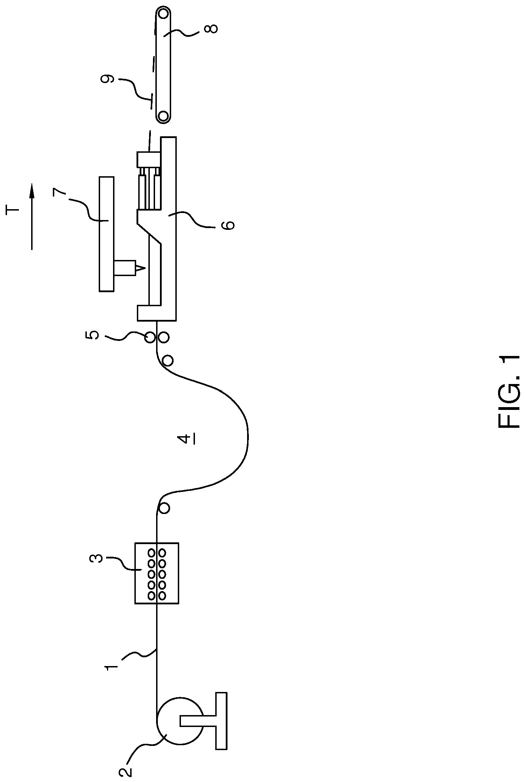

Bei der in Fig. 1 gezeigten Laserschneidlinie wird ein Blechband 1 von einem Coil 2 abgewickelt und in einer Transportrichtung T durch eine Walzenrichtmaschine 3 geführt. Stromabwärts der Walzenrichtmaschine 3 befindet sich eine Schlaufengrube 4. Mit dem Bezugszeichen 5 ist eine z. B: aus zwei einander gegenüberliegenden Klemmwalzen gebildete Zuführeinrichtung zum Zuführen des Blechbands 1 zu einer kombinierten Reck- und Laserschneidvorrichtung bezeichnet. Die Reckeinrichtung ist mit dem Bezugszeichen 6 und die Laserschneidvorrichtung mit dem Bezugszeichen 7 bezeichnet. Stromabwärts der kombinierten Reck- und Laserschneidvorrichtung befindet sich ein Förderband 8 zum Abtransport geschnittener Blechplatinen 9.

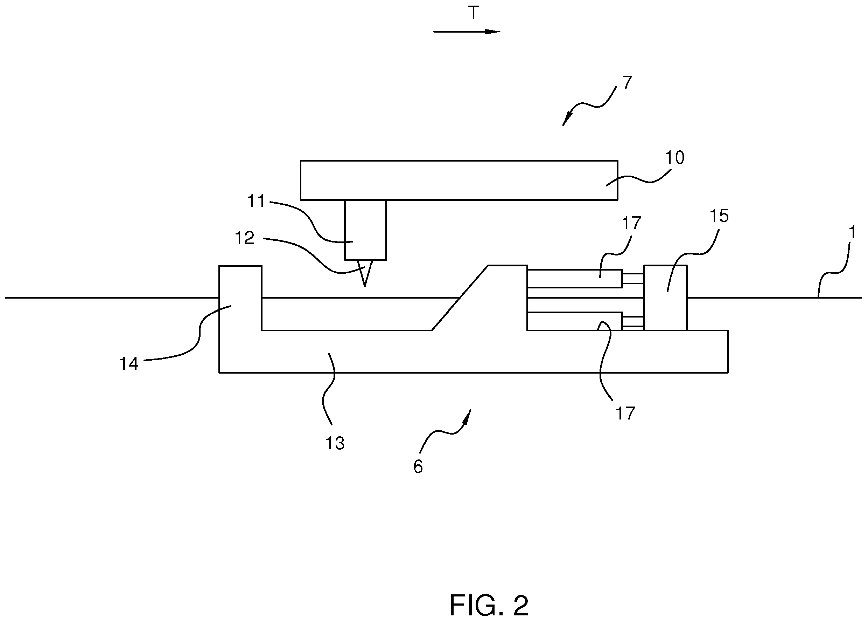

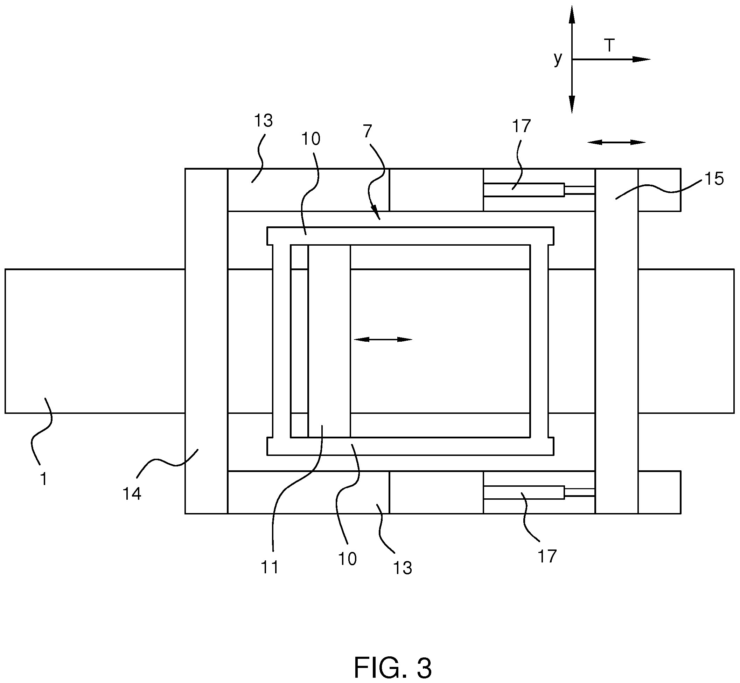

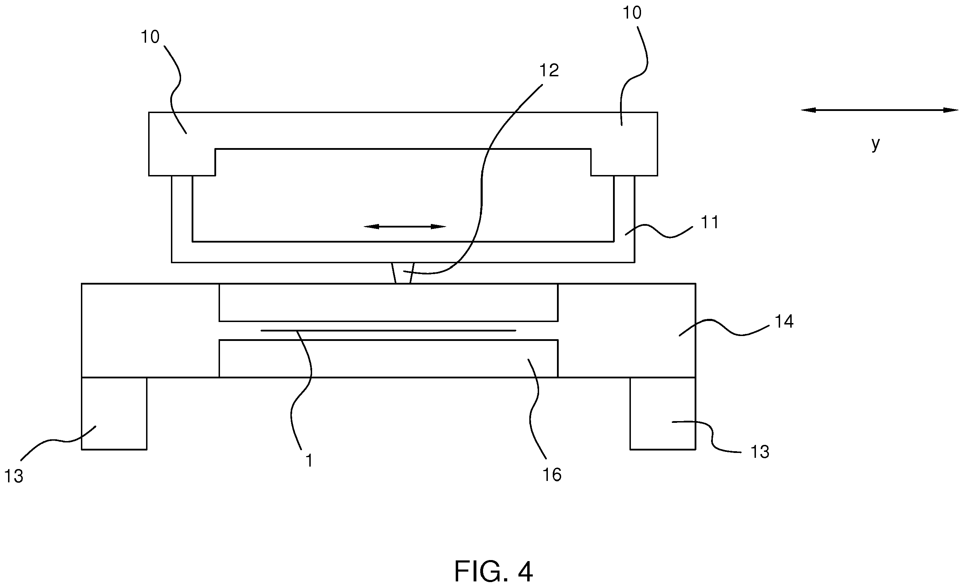

Die Fig. 2 bis 4 zeigen Ansichten der kombinierten Reck- und Laserschneidvorrichtung gemäß Fig. 1.

Die Laserschneidvorrichtung 7 umfasst zwei in Transportrichtung T sich erstreckende Schienen 10, an denen hängend eine Brücke 11 angebracht ist, welche in Transportrichtung T hin und her bewegbar ist. Ein Laserschneidkopf 12 ist an der Brücke 11 in einer senkrecht zur Transportrichtung T verlaufenden y-Richtung hin und her bewegbar angebracht. Der Laserschneidkopf 12 ist mittels einer Steuerung beliebig in y- und Transportrichtung T steuerbar. Er wird mit der Steuerung entlang eines vorgegebenen Schneidwegs bewegt. Der vorgegebene Schneidweg entspricht einer gewünschten äußeren Kontur der herzustellenden Blechplatine 9.

Die Reckeinrichtung 6 umfasst zwei Längsholme 13, welche sich in Draufsicht auf die Laserschneidvorrichtung 7 beiderseits der Schienen 10 in Transportrichtung T erstrecken. Mit dem Bezugszeichen 14 ist eine erste Recktraverse bezeichnet, welche stromaufwärts der Laserschneidvorrichtung 7 angeordnet ist. Das Bezugszeichen 15 bezeichnet eine zweite Recktraverse, welche stromabwärts der Laserschneidvorrichtung 7 angeordnet ist. An der ersten Recktraverse 14 ist eine erste Klemmvorrichtung 16 aufgenommen, welche einander gegenüberliegende obere und untere Klemmbacken umfasst. Die Klemmbacken können zum Klemmen des Blechbands 1 gegeneinander bewegt werden. Die Klemmbacken sind zweckmäßigerweise so geführt, dass sich beim Recken des geklemmten Blechabschnitts eine mit den Klemmbacken auf den Blechabschnitt ausgeübte Klemmkraft vergrößert. Auch an der zweiten Recktraverse 15 ist - ähnlich wie die erste Recktraverse 14 - eine zweite Klemmvorrichtung mit oberen und unteren Klemmbacken (hier nicht gezeigt) aufgenommen.

Mit dem Bezugszeichen 17 ist eine Hydraulikeinrichtung bezeichnet, mit welcher die zweite Recktraverse 15 relativ zur ersten Recktraverse 14 in Transportrichtung T hin und her bewegbar ist. Selbstverständlich kann es auch sein, dass die stromabwärts der Laserschneidvorrichtung 7 angeordnete zweite Recktraverse 15 feststehend und die stromaufwärts der Laserschneidvorrichtung 7 angeordnete erste Recktraverse 14 relativ zur zweiten Recktraverse 15 entgegen der Transportrichtung hin und her bewegbar ist. Ferner ist es auch möglich, dass sowohl die erste 14 als auch die zweite Recktraverse 15 in Transportrichtung hin und her bewegbar sind.

Die Funktion der Vorrichtung ist Folgende:
Das vom Coil 2 abgewickelte Blechband 1 wird mit der Walzenrichtmaschine 3 gerichtet. Die Schlaufengrube 4 dient als Speicher für das kontinuierlich vom Coil 2 abgewickelte Blechband 1. Mittels der Zuführeinrichtung 5 wird das Blechband taktweise der kombinierten Reck- und Laserschneidvorrichtung zugeführt. Nach dem Zuführen eines vorgegebenen Blechabschnitts zur kombinierten Reck- und Laserschneidvorrichtung wird der Blechabschnitt stromauf- und stromabwärts mittels den an der ersten 14 und der zweiten Recktraverse 15 vorgesehenen Klemmvorrichtungen 16 klemmend gegriffen. Anschließend wird mittels der Hydraulikeinrichtung 17 die zweite Recktraverse 15 in Transportrichtung T bewegt, so dass der zwischen den Recktraversen 14, 15 gehaltene Blechabschnitt gereckt wird. Danach wird der Blechabschnitt entspannt. Die an der zweiten Recktraverse vorgesehene zweite Klemmvorrichtung wird geöffnet. Der Blechabschnitt kann weiterhin mittels der an der ersten Recktraverse 14 vorgesehenen ersten Klemmvorrichtung 16 klemmend gehalten werden.

Nachfolgend wird aus dem gereckten Blechabschnitt mittels der Laserschneidvorrichtung 7 eine Blechplatine 9 mit einer vorgegebenen Kontur geschnitten. Sobald die Blechplatine 9 vollständig aus dem Blechabschnitt herausgeschnitten worden ist, wird der geschnittene Blechabschnitt samt der Blechplatine 9 in Transportrichtung T aus der kombinierten Reck- und Laserschneidvorrichtung mittels einer geeigneten Fördervorrichtung (hier nicht gezeigt) heraustransportiert.

Obwohl es in den Figuren nicht gezeigt ist, kann die kombinierte Reck- und Laserschneidvorrichtung anstelle des Blechbands 1 auch mit Blechtafeln beschickt werden.

Die Laserschneidvorrichtung 7 kann auch mehrere unabhängig voneinander bewegbare Laserschneidköpfe 12 umfassen.

## Patentansprüche

1. Verfahren zur Herstellung einer Blechplatine (9) mittels Laserschneiden mit folgenden Schritten:
Zuführen eines Blechs (1) in einer Transportrichtung (T) zu einer Laserschneidvorrichtung (7), welche einen in Transportrichtung (T) und in einer senkrecht zur Transportrichtung (T) verlaufenden y-Richtung hin und her bewegbaren Laserschneidkopf (12) aufweist,
klemmendes Greifen eines ersten Abschnitts des Blechs (1) stromaufwärts der Laserschneidvorrichtung (7) mittels einer ersten Klemmvorrichtung (16) und klemmendes Greifen eines zweiten Abschnitts des Blechs (1) stromabwärts der Laserschneidvorrichtung (7) mittels einer zweiten Klemmvorrichtung,
Recken des in der Laserschneidvorrichtung (7) aufgenommenen Blechs (1) durch Erzeugen einer Zugspannung auf das zwischen der ersten (16) und der zweiten Klemmvorrichtung klemmend gehaltene Blech (1),
Entspannen des Blechs (1), und
Schneiden der Blechplatine (9) aus dem Blech (1) durch Bewegen des Laserschneidkopfs (12) entlang eines vorgegebenen Schneidwegs.

2. Verfahren nach Anspruch 1, wobei das Blech (1) beim Schneiden höchstens mit einer der Klemmvorrichtungen (16) gehalten wird.

3. Verfahren nach einem der vorhergehenden Ansprüche, wobei das Blech (1) taktweise der Laserschneidvorrichtung (7) zugeführt wird.

4. Verfahren nach einem der vorhergehenden Ansprüche, wobei das Blech (1) ein Blechband ist, welches kontinuierlich von einem Coil (2) abgewickelt und stromaufwärts der ersten Klemmvorrichtung (16) durch eine Schlaufengrube (4) geführt wird.

5. Vorrichtung zur Herstellung einer Blechplatine (9) mittels Laserschneiden, umfassend:
eine Laserschneidvorrichtung (7) mit einem in einer Transportrichtung (T) und in einer senkrecht zur Transportrichtung (T) verlaufenden y-Richtung hin und her bewegbaren Laserschneidkopf (12), und
eine Reckeinrichtung (6) zum Recken eines in der Laserschneidvorrichtung aufgenommenen Blechs (1), umfassend eine stromaufwärts der Laserschneidvorrichtung (7) vorgesehene erste Klemmvorrichtung (16) zum klemmenden Greifen eines ersten Abschnitts des Blechs (1), eine stromabwärts der Laserschneidvorrichtung (7) vorgesehene zweite Klemmvorrichtung zum klemmenden Greifen eines zweiten Abschnitts des Blechs (1) und eine Einrichtung zur Änderung eines Abstands zwischen der ersten (16) und der zweiten Klemmvorrichtung, so dass auf ein damit klemmend gegriffenes Blech (1) eine Zugspannung ausgeübt wird, derart, dass eine Streckgrenze eines das Blech (1) bildenden Metalls überschritten wird, so dass das Blech (1) plastisch verformt wird.

6. Vorrichtung nach Anspruch 5, wobei die Reckeinrichtung (6) einen Rahmen aus zwei sich in Transportrichtung (T) erstreckenden Längsholmen (13), eine die erste Klemmvorrichtung (16) aufnehmende, sich in y-Richtung erstreckende erste Recktraverse (14) und eine die zweite Klemmvorrichtung aufnehmende, sich in y-Richtung erstreckende zweite Recktraverse (15) umfasst.

7. Vorrichtung nach Anspruch 6, wobei die Laserschneidvorrichtung (7) in Draufsicht innerhalb des Rahmens angeordnet ist.

8. Vorrichtung nach einem der Ansprüche 5 bis 7, weiterhin umfassend eine Zuführeinrichtung (5) zum Zuführen des Blechs (1) in der Transportrichtung (T) zur Laserschneidvorrichtung (7).

9. Vorrichtung mit einem Blech (1) nach einem der Ansprüche 5 bis 8, wobei das Blech (1) ein auf einem Coil (2) aufgenommenes Blechband ist.

10. Vorrichtung nach einem der Ansprüche 5 bis 9, wobei stromaufwärts der Zuführeinrichtung (5) eine Schlaufengrube (4) vorgesehen ist.

11. Vorrichtung mit einem Blech (1) nach einem der Ansprüche 5 bis 10, wobei das Blech (1) mittels der Zuführeinrichtung (5) taktweise zur Laserschneidvorrichtung (7) zuführbar ist.

12. Vorrichtung nach einem der Ansprüche 6 bis 11, wobei die Einrichtung zur Änderung des Abstands zwischen der ersten (16) und der zweiten Klemmvorrichtung eine Hydraulikeinrichtung (17) ist, mit welcher zumindest eine der beiden Recktraversen (14, 15) in Transportrichtung (T) hin und her bewegbar ist.

## Claims

1. A method for producing a sheet-metal blank (9) by means of laser cutting, comprising the following steps:
feeding a metal sheet (1) in a transport direction (T) to a laser cutting device (7), which has a laser cutting head (12) movable back and forth in the transport direction (T) and in a y-direction extending vertically to the transport direction (T),
clampingly gripping a first portion of the metal sheet (1) upstream of the laser cutting device (7) by means of a first clamping device (16) and clampingly gripping a second portion of the metal sheet (1) downstream of the laser cutting device (7) by means of a second clamping device,
stretching the metal sheet (1) accommodated in the laser cutting device (7) by generating a tensile stress on the metal sheet (1) clampingly held between the first (16) and the second clamping device,
relaxing the metal sheet (1), and
cutting the sheet-metal blank (9) from the metal sheet (1) by moving the laser cutting head (12) along a predefined cutting path.

2. The method according to claim 1, wherein the metal sheet (1) is held at most by one of the clamping devices (16) during the cutting.

3. The method according to any one of the preceding claims, wherein the metal sheet (1) is fed in a clocked manner to the laser cutting device (7).

4. The method according to any one of the preceding claims, wherein the metal sheet (1) is a sheet-metal strip, which is unwound continuously from a coil (2) and is guided through a loop pit (4) upstream of the first clamping device (16).

5. A device for producing a sheet-metal blank (9) by means of laser cutting, comprising:
a laser cutting device (7) having a laser cutting head (12) movable back and forth in a transport direction (T) and in a y-direction extending vertically to the transport direction (T), and
a stretching device (6) for stretching a metal sheet (1) accommodated in the laser cutting device, comprising a first clamping device (16) provided upstream of the laser cutting device (7) for clampingly gripping a first portion of the metal sheet (1), a second clamping device provided downstream of the laser cutting device (7) for clampingly gripping a second portion of the metal sheet (1), and a mechanism for changing a distance between the first (16) and the second clamping device such that a tensile stress is exerted onto a metal sheet (1) that is clampingly gripped therewith, in such a way that that the yield point of a metal forming the metal sheet (1) is exceeded, so that the metal sheet (1) is plastically deformed.

6. The device according to claim 5, wherein the stretching device (6) comprises a frame formed of two longitudinal struts (13) extending in the transport direction (T), a first stretching crossmember (14) accommodating the first clamping device (16) and extending in the y-direction, and a second stretching crossmember (15) accommodating the second clamping device and extending in the y-direction.

7. The device according to claim 6, wherein the laser cutting device (7) is arranged within the frame in plan view.

8. The device according to any one of claims 5 to 7, further comprising a feeding device (5) for feeding the metal sheet (1) in the transport direction (T) to the laser cutting device (7).

9. The device according to any one of claims 5 to 8, wherein the metal sheet (1) is a sheet-metal strip accommodated on a coil (2).

10. The device according to any one of claims 5 to 9, wherein a loop pit (4) is provided upstream of the feeding device (5).

11. The device according to any one of claims 5 to 10, wherein the metal sheet (1) can be fed in a clocked manner to the laser cutting device (7) by means of the feeding device (5).

12. The device according to any one of claims 6 to 11, wherein the mechanism for changing the distance between the first (16) and the second clamping device is a hydraulic device (17), by means of which at least one of the two stretching crossmembers (14, 15) can be moved back and forth in the transport direction (T).

## Revendications

1. Procédé de fabrication d'un flan de tôle (9) par coupe au laser comprenant les étapes suivantes consistant à :
amener une tôle (1) dans un sens de transport (T) vers un dispositif de coupe au laser (7) qui comporte une tête de coupe au laser (12) pouvant se déplacer en va-et-vient dans un sens de transport (T) et dans un sens y perpendiculaire au sens de transport (T),
saisir par serrage une première section de la tôle (1) en amont du dispositif de coupe au laser (7) au moyen d'un premier dispositif de serrage (16) et saisir par serrage une seconde section de la tôle (1) en aval du dispositif de coupe au laser (7) au moyen d'un second dispositif de serrage,
étirer la tôle (1) logée dans le dispositif de coupe au laser (7) en générant une tension de traction sur la tôle (1) retenue par serrage entre le premier (16) et le second dispositif de serrage,
desserrer la tôle (1), et
découper le flan de tôle (9) de la tôle (1) par déplacement de la tête de coupe au laser (12) le long d'une trajectoire de coupe définie.

2. Procédé selon la revendication 1, en ce que la tôle (1) lors de la découpe est retenue au maximum par l'un des deux dispositifs de serrage (16).

3. Procédé selon l'une des revendications précédentes, en ce que la tôle (1) est amenée de manière cadencée au dispositif de coupe au laser (7).

4. Procédé selon l'une des revendications précédentes, en ce que la tôle (1) est une bande de tôle qui est déroulée en continu d'une bobine (2) et guidée en amont du premier dispositif de serrage (16) par une fosse à boucle (4).

5. Dispositif de fabrication d'un flan de tôle (9) par coupe au laser comprenant :
un dispositif de coupe au laser (7) avec une tête de coupe au laser (12) pouvant se déplacer en va-et-vient dans un sens de transport (T) et dans un sens y perpendiculaire au sens de transport (T), et
un dispositif d'étirage (6) servant à l'étirage d'une tôle (1) logée dans le dispositif de coupe au laser, comprenant un premier dispositif de serrage (16) ménagé en amont du dispositif de coupe au laser (7) et saisissant par serrage une première section de la tôle (1), un second dispositif de serrage ménagé en amont du dispositif de coupe au laser (7) et saisissant par serrage une seconde section de la tôle (1) et un dispositif modifiant une distance entre le premier (16) et le second dispositif de serrage de sorte qu'une tension de traction est exercée sur une tôle (1) ainsi saisie par serrage de telle sorte qu'une limite d'étirage d'un métal formant la tôle (1) est dépassée de façon à ce que la tôle (1) soit déformée plastiquement.

6. Dispositif selon la revendication 5, en ce que le dispositif d'étirage (6) comporte un cadre constitué de deux longerons (13) s'étendant dans le sens de transport (T), une première traverse d'étirage (14) logeant le premier dispositif de serrage (16), s'étendant dans le sens y et une seconde traverse d'étirage (15) logeant le second dispositif de serrage, s'étendant dans le sens y.

7. Dispositif selon la revendication 6, en ce que le dispositif de coupe au laser (7) est disposé vue d'en haut dans le cadre.

8. Dispositif selon l'une des revendications 5 à 7, comprenant en outre un dispositif d'amenée (5) servant à amener la tôle (1) dans le sens de transport (T) vers le dispositif de coupe au laser (7).

9. Dispositif avec une tôle (1) selon l'une des revendications 5 à 8, en ce que la tôle (1) est une bande de tôle logée sur une bobine (2).

10. Dispositif selon l'une des revendications 5 à 9, en ce qu'une fosse à boucle (4) est prévue en amont du dispositif d'amenée (5).

11. Dispositif avec une tôle (1) selon l'une des revendications 5 à 10, en ce que la tôle (1) peut être amenée de manière cadencée vers le dispositif de coupe au laser (7) au moyen du dispositif d'amenée (5).

12. Dispositif selon l'une des revendications 6 à 11, en ce que le dispositif de modification de la distance entre le premier (16) et le second dispositif de serrage est un dispositif hydraulique (17) permettant de déplacer en va-et-vient au moins l'une des deux traverses d'étirage (14, 15) dans le sens de transport (T).
